# EUROPEAN PATENT SPECIFICATION

(11) **EP 3 160 247 B1**
(45) Date of publication and mention of the grant of the patent: **29.04.2020**
(21) Application number: 15726972.1
(22) Date of filing: 05.06.2015
(51) Int. Cl.: A23F 5/20, A23F 5/22, A23F 5/40, A23F 5/12, A23F 5/24, A23F 5/28

(54) **COFFEE BEVERAGE COMPOSITION AND METHOD OF PRODUCING IT**
KAFFEEGETRÄNKZUSAMMENSETZUNG SOWIE VERFAHREN ZUR HERSTELLUNG DIESER ZUSAMMENSETZUNG
COMPOSITION POUR UNE BOISSON AU CAFÉ ET MÉTHODE POUR SA FABRICATION

(30) Priority: 27.06.2014 US 201462018234 P
(43) Date of publication of application: 03.05.2017
(73) Proprietor: Société des Produits Nestlé S.A., 1800 Vevey (CH)
(72) Inventor: BIRCH, Annette Michelle, Marysville, OH 43040 (US); CAVINATO, Mauro, 1110 Morges (CH); CHAVEZ MONTES, Bruno, 1012 Lausanne (CH); CROW, Darren William, Westerville, OH 43081 (US); DUPAS, Julien, 1350 Orbe (CH); ELSBY, Kevan, 1350 Orbe (CH); FUSON, Robert Wayne, Marysville, OH 43040 (US); MORA, Federico, 1110 Morges (CH); SRBLJIN, Marija, 1350 Orbe (CH)
(86) International application number: PCT/EP2015/062556
(87) International publication number: WO 2015/197340

(56) References cited:
- EP-A1- 2 491 797
- WO-A1-2011/139257
- AU-B2- 527 801
- US-A1- 2011 183 048
- Belitz H D, Grosch W, Shieberle P: "Food Chemistry", 15 January 2009 (2009-01-15), Springer, Leipzig, XP002745133, ISBN: 978-3-540-69935-4 pages 942-943, DOI: 10.1007/978-3-540-69934-7, paragraph [21.1.3.3.3]; tables 21.3, 21.5

## Description

### Field of the invention

The present invention relates to a coffee beverage composition comprising particles of roast coffee beans and methods of producing it.

### Background

Soluble coffee products such as powdered instant coffee, liquid coffee concentrates and ready-to-drink coffee beverages are made of extracts of coffee beans and characterised by comprising water soluble coffee solids.. Soluble coffee products are used to prepare coffee beverages by addition of liquid, normally water and/or milk, or they may be suitable for direct consumption as liquid ready-to-drink coffee beverages. Soluble coffee products may be pure soluble coffee products consisting of pure coffee extract or they may be mixed products additionally comprising ingredients such as creamer, sweetener, foamer, aroma, and the like. Conventionally, soluble coffee is produced from coffee beans by roasting and grinding followed by water extraction. The aqueous extract thus produced may be concentrated, e.g. by evaporation, and finally it may be dried, e.g. by spray drying or freeze drying, if a dried powdery product is desired. Methods to reduce aroma loss during extraction and concentration may be applied, for example aroma may be stripped from the roast and ground coffee beans, and this aroma may be added back to the liquid extract after concentration. Such methods are well known in the art, e.g. from WO 01/13735 and EP 1069830. Important characteristics of soluble coffee products is taste, aroma and appearance of the beverage produced from the product, often a taste and aroma close to the taste and aroma of a fresh brew directly from roast and ground coffee beans is desired. To achieve a good aroma it is known that an amount of finely ground roast coffee particles can be incorporated into the soluble coffee extract, e.g. by adding the particles to the liquid concentrated extract or adding the particles to a dry powder of coffee extract. Such products are e.g. disclosed in DE 19700084 and GB2022394. US 20111/0183048 describes soluble coffee products comprising micro-milled roast and ground coffee particles. WO2011/139257 describes an instant powder form Turkish coffee comprising roast and ground coffee beans, a foaming agent, coffee extract powder and a thickener. EP 2 491 797 describes an instant Turkish coffee product comprising roast and ground coffee with an average particle size between 50 microns and 150 microns and an emulsifier. The particle size and the presence of the emulsifier eliminate or reduce the presence of roast and ground particles remaining at the surface of the reconstituted beverage. AU 527801 describes an aromatized food product comprising a mixture of low-aroma food material, such as decaffeinated or soluble coffee, and of aroma-loaded vegetable material such as roasted coffee particles. Roast and ground coffee particles contain diterpenes, mainly cafestol, kawheol and 16-O-methyl cafestol, as e.g. described in Belitz H.D. et al., Food Chemistry, 15 January 2009, pages 942-943 (Springer). An elevated intake of diterpenes, especially cafestol, has been associated with an increased level of blood cholesterol in humans.

### Summary of the invention

The inventors have found that when roast and ground coffee particles are added to a coffee extract to produce a soluble coffee product comprising particles of roast and ground coffee, an unpleasant layer of scum and/or an oil slick may form on top of the coffee beverage produced from the soluble coffee product as well as an undesirable sediment at the bottom of the cup. The scum appears as unpleasant, tarry material that sticks to the side of the cup as the beverage is consumed leaving a dirty appearance. This problem is more pronounced when high amounts of roast and ground particles are added, and when the added particles are small. Addition of high amounts of roast and ground particles may be desirable to achieve the optimal aroma and taste impact. If the particles are big, however, they will be felt in the mouth when the beverage is consumed so the addition of high amounts of roast and ground particles require that the particles are sufficiently small not to give an unpleasant mouthfeel. Since both high amounts of particles as well as small particle size contribute to the problem of scum formation in the beverage, there is a need to remove or reduce the scum formation in order to produce a beverage with the desired taste and aroma as well as mouthfeel and appearance from a soluble coffee product comprising roast and ground coffee particles. Furthermore, since roast and ground coffee particles contain diterpenes which may have an impact on blood cholesterol at elevated intake levels, there is a desire to reduce the content of diterpenes in coffee beverages compositions, especially coffee beverage compositions containing high amounts of roast and ground coffee particles.

The inventors have found that coffee oil in the roast and ground coffee particles is involved in the scum and sediment formation, and that diterpemes is a good marker for the content of coffee oil in coffee beverage compositions. Accordingly, the present invention relates to a coffee beverage composition comprising i) at least 10% by weight of particles of roast coffee beans; and ii) at least 30% by weight of soluble coffee solids extracted from roast coffee beans; wherein the composition comprises less than 1.2 mg of diterpenes per g of coffee solids. The invention further relates to a method of preparing a coffee beverage composition, the method comprising: a) providing particles of roast coffee beans; b) preparing an aqueous slurry of particles of roast coffee beans obtained in step a); c) removing coffee oil from the aqueous slurry of particles of roast coffee beans obtained in step b); and d) combining the aqueous slurry of particles of roast coffee beans with soluble coffee solids extracted from roast coffee beans; wherein step d) is performed before and/or after step c).

### Brief description of the figures

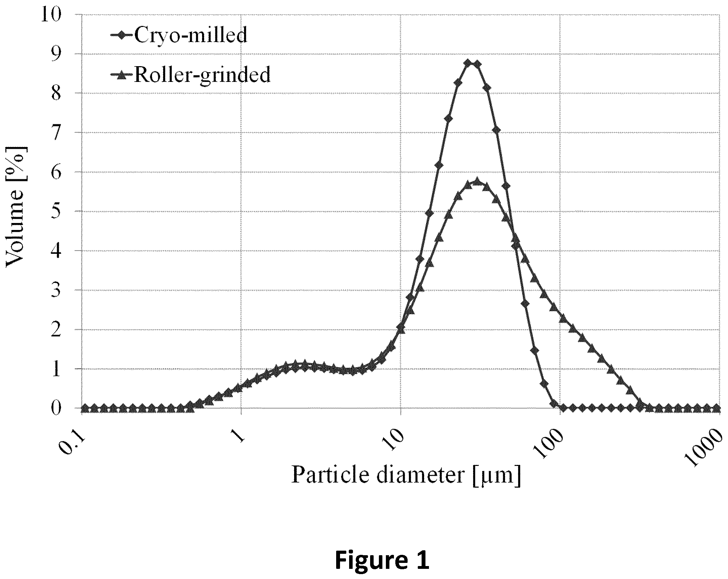

Figure 1 shows the size distributions of particles of roast coffee beans using two different milling methods as described in example 2.

### Detailed description of the invention

### Definitions

By coffee beans is meant beans, or seeds, from any variety of the coffee plant. By particles of roast coffee beans are meant particles produced from roast coffee beans by breaking the coffee beans into smaller pieces in any suitable way, e.g. by crushing, milling, grinding, or the like. Roast coffee beans may be produced by roasting of green coffee beans in any suitable way to produce aroma notes associated with roast coffee. Suitable roasting methods are well known in the art.

By particles of roast *Coffea arabica* coffee beans is meant particles of roast beans of the *Coffea arabica* variety, also called Arabica coffee; and by particles of roast *Coffea canephora* coffee beans is meant particles of roast beans of the *Coffea canephora* variety, also called Robusta coffee.

By soluble coffee solids extracted from roast coffee beans is meant water soluble coffee compounds, excluding water, that has been extracted from roast coffee beans using water and/or steam. Methods for extraction of soluble solids from coffee beans are well known in the art of soluble coffee production and any suitable method may be used.

Coffee oil is the lipid fraction of coffee beans and is mainly composed of triacylglycerols (usually about 75%), free fatty acids (usually about 1%), sterols (usually about 2.2% unesterified and 3.2% esterified with fatty acids), and tocopherols (usually about 0.05%). The oil also contains diterpenes (up to about 20%).

By a coffee beverage composition is meant a liquid composition suitable for direct consumption as a coffee beverage, or a composition in liquid or solid state, e.g. as a liquid concentrate, a dry powder or a tablet, useful for preparing a coffee beverage by addition of liquid, e.g. water and/or milk. An example of a coffee beverage composition is a dry soluble coffee powder.

Compositions are characterised herein by their content by weight of components, e.g. particles of roast coffee beans and soluble coffee solids. When content by weight is given herein it is based on dry weight of the composition, unless specifically indicated, so that any content of water in the composition, e.g. in the case of a liquid composition, is disregarded in the determination of content by weight. When content of water is given by weight it is based on the total weight of the composition including water.

### Composition

Coffee beans naturally contain diterpenes as part of the lipid fraction of the beans, the majority of the diterpenes are normally esterified to various fatty acids. Coffee contains mainly three diterpenes, cafestol, kawheol and 16-O-methyl cafestol. The level and proportion of each diterpene essentially depends on the coffee species. *Coffea arabica* contains essentially cafestol and kawheol, and *Coffea canephora* contains essentially cafestol and 16-O-methyl cafestol.

*Coffea arabica* and *Coffea canephora* coffee beans have very different content of coffee oil, roaste *Coffea Arabica* beans normally comprise about 17% and roasted *Coffea canephora* coffee beans about 11% coffee oil by weight. The composition of the present invention has an oil content which is reduced compared to a conventional coffee composition comprising a similar amount of particles of roast *Coffea arabica* and/or roast *Coffea canephora* coffee beans.

The composition of the invention comprises at least 10% by weight of particles of roast coffee beans, such as at least 15%, at least 20%, at least 25%, or at least 30% by weight of particles of roast coffee beans. In a preferred embodiment, the composition comprises between 10% and 60% by weight of particles of roast coffee beans, more preferably between 15% and 50%, even more preferably between 20% and 50%, most preferably between 25% and 40% by weight of particles of roast coffee beans.

The composition of the invention also comprises at least 30% by weight of soluble coffee solids extracted from roasted coffee beans, such as at least 40%, at least 50%, or at least 60% of soluble coffee solids extracted from roasted coffee beans. In a preferred embodiment, the composition comprises between 30% and 90% by weight of soluble coffee solids extracted from roasted coffee beans, more preferably between 50% and 85%, even more preferably between 50% and 80% and most preferably between 60% and 75% of soluble coffee solids extracted from roasted coffee beans.

Diterpene content is an indicator of oil content of the coffee beans as diterpenes form part of the coffee oil. Furthermore, it may be desired to keep the diterpene level low, as described above. The coffee beverage composition of the present invention comprises less than 1.2 mg of diterpenes per g of coffee solids, preferably less than 1.0 mg, more preferred less than 0.8 mg of diterpenes per g of coffee solids. In a preferred embodiment of the invention, the composition comprises less than 0.6 mg of cafestol per g of coffee solids, preferably less than 0.5 mg, more preferred less than 0.4 mg of cafestol per g of coffee solids.

In one embodiment, the composition of the invention comprises an amount of coffee oil which is less than the sum of: 15% by weight of the amount of roast *Coffea arabica* coffee particles and 7% by weight of the amount of roast *Coffea canephora* coffee particles. In a preferred embodiment the composition of the invention comprises an amount of coffee oil which is less than the sum of: 13% by weight of the amount of roast *Coffea arabica* coffee particles, and 6% by weight of the amount of roast *Coffea canephora* coffee particles; in a more preferred embodiment the composition of the invention comprises an amount of coffee oil which is less than the sum of: 10% by weight of the amount of roast *Coffea arabica* coffee particles, and 4% by weight of the amount of roast *Coffea canephora* coffee particles. In a further preferred embodiment the composition comprises an amount of coffee oil which is less than 5% by weight of the total amount of roast *Coffea arabica* and *Coffea canephora* coffee particles, even more preferred less than 4% by weight of the total amount of roast *Coffea arabica* and *Coffea canephora* coffee particles.

The particles of roast coffee beans in the composition and method of the invention can be characterized by their size distribution. The particle size may e.g. be measured by laser diffraction methods, and can e.g. be characterised by its volume distribution, e.g. using the parameter D₅₀, (volume median diameter) the diameter which 50% (based on volume) of the particle population is below, and/or D₉₀, the diameter which 90% (based on volume) of the particle population volume is below. It has been found that it is easier to remove diterpenes and oil from particles which are relatively small as compared to larger particles. For this reason the size distribution of particles of roast coffee beans in the composition preferably has a D₉₀ below 150 micrometer, preferably below 80 micrometer, and more preferably below 60 micrometer. D₅₀ of the size distribution of particles of roast coffee beans in the composition is preferably below 50 micrometer, more preferably below 40 micrometer.

The composition of the invention may comprise further components. For example, the composition may comprise soluble coffee solids obtained by extraction of coffee beans. Methods for extracting soluble coffee solids from coffee beans are well known in the art of producing soluble coffee, and any suitable method may be used, e.g. the methods disclosed in EP 0826308 and EP 0916267.

The coffee beverage composition of the invention may further comprise any other ingredient useful in a coffee beverage composition, such as e.g. creamer, whitener, milk powder, caseinate, milk fat, vegetable oil, sweetener, e.g. sugar and/or artificial sweetener, foamer, aroma compounds, and buffer salts.

In a preferred embodiment, the coffee beverage composition of the invention is a pure coffee beverage composition. By a pure coffee beverage composition is meant a composition that substantially only consists of components derived from coffee plant material, preferably only derived from coffee beans.

In a preferred embodiment, the invention relates to a coffee beverage composition comprising i) between 15% and 50% by weight of particles of roast coffee beans; and ii) between 50% and 85% by weight of soluble coffee solids extracted from roast coffee beans; wherein the composition comprises less than 0.8 mg of diterpenes per g of coffee solids.

In another preferred embodiment, the invention relates to a pure coffee beverage composition comprising i) between 15% and 50% by weight of particles of roast coffee beans; and ii) between 50% and 85% by weight of soluble coffee solids extracted from roast coffee beans; wherein the composition comprises less than 0.8 mg of diterpenes per g of coffee solids, and wherein D₉₀ of the size distribution of particles of roast coffee beans is below 80 micrometer.

### Method

The invention also relates to a method for the production of the composition, the method comprising: a) providing particles of roast coffee beans; b) preparing an aqueous slurry of particles of roast coffee beans obtained in step a); c) removing coffee oil from the aqueous slurry of the particles of roast coffee beans obtained in step b); and d) combining the aqueous slurry of particles of roast coffee beans with soluble coffee solids extracted from roast coffee beans; wherein step d) is performed before and/or after step c).

The particles of roast coffee beans provided in step a) may be prepared by any suitable method, e.g. by crushing, milling, grinding, or the like. Green coffee beans may be roasted before or after being broken to provide coffee particles. Suitable methods are e.g. wet ball milling, cryogenic milling, roller milling and air jet milling. Milling or grinding may be performed on dry coffee beans or in a slurry. The particles of roast coffee beans provided in step a) preferably have a D₉₀ below 150 micrometer, preferably below 80 micrometer, and more preferably below 60 micrometer. D₅₀ of the particles of roast coffee beans in the composition is preferably below 50 micrometer, more preferably below 40 micrometer.

The slurry prepared in step b) may be prepared with any suitable aqueous liquid, preferably water or an aqueous extract of roasted coffee beans. The slurry may be prepared before milling or grinding the coffee beans, such that milling or grinding is performed in the slurry. For example, coffee beans may undergo a coarse grinding in the dry state, and then a further grinding or milling step in the wet state to achieve the final desired particle size. The slurry prepared in step b) preferably comprises between 5% and 50% of roast coffee particles by weight of the total slurry including water, more preferably between 10% and 30% of roast coffee particles by weight of the total slurry including water.

In a preferred embodiment the aqueous slurry is prepared by suspending roast coffee particles in a liquid aqueous coffee extract. The liquid coffee extract preferably comprises between 5% and 80% by weight including water of soluble coffee solids, more preferably between 25% and 60% by weight including water of soluble coffee solids.

The oil removal performed in step c) may be performed by any suitable method, e.g. by centrifugation, decanting, settling, pressing, and/or solvent extraction, e.g. with supercritical CO₂.

In a preferred embodiment at least 10% by weight of the coffee oil present in the slurry is removed in step c), such as at least 15%, at least 20%, at least 30%, at least 50%, or at least 70%.

The method of the invention further comprises step d) combining the aqueous slurry of particles of roast coffee beans with soluble coffee solids extracted from roast coffee beans. Step d) may be performed before and/or after step c). Step d) may e.g. be performed before step c) by using a liquid extract of coffee beans to produce the slurry in step b), as described above. Alternatively, or additionally, soluble coffee solids extracted from roast coffee beans may be added to the slurry after oil removal, e.g. by adding extract of roast coffee beans, in dry or liquid form, to the slurry. In a preferred embodiment step d) is performed before step c), more preferably soluble solids extracted from roast coffee beans are added combined with the slurry by using a liquid extract of roast coffee beans to produce the slurry in step b).

In a preferred embodiment combining the aqueous slurry of particles of roast coffee beans with soluble coffee solids extracted from roast coffee beans is performed so that the coffee beverage composition comprises at least 10% by weight of particles of roast coffee beans, such as at least 15%, at least 20%, at least 25%, or at least 30% by weight of particles of roast coffee beans. In a preferred embodiment, the composition comprises between 10% and 60% by weight of particles of roast coffee beans, more preferably between 15% and 50%, even more preferably between 20% and 50%, most preferably between 25% and 40% by weight of particles of roast coffee beans.

In a further preferred embodiment combining the aqueous slurry of particles of roast coffee beans with soluble coffee solids extracted from roast coffee beans is performed so that the coffee beverage composition comprises at least 30% by weight of soluble coffee solids extracted from roasted coffee beans, such as at least 40%, at least 50%, or at least 60% of soluble coffee solids extracted from roasted coffee beans. In a preferred embodiment, the composition comprises between 30% and 90% by weight of soluble coffee solids extracted from roasted coffee beans, more preferably between 50% and 85%, even more preferably between 50% and 80% and most preferably between 60% and 75% of soluble coffee solids extracted from roasted coffee beans.

The inventors have found that treatment of the aqueous slurry of particles of roast coffee beans with ultrasound facilitates the separation of oil from the slurry. The slurry may be treated with ultrasound before removal of the oil to facilitate the oil removal, and/or ultrasound may be used during oil removal. It has been found that after ultrasound treatment the oil may be removed by simple methods such as decanting. The effect of ultrasound treatment is especially pronounced with relatively small particles of roast coffee beans, as compared to larger particles. Accordingly, in a preferred embodiment of the method the aqueous slurry of particles of roast coffee beans is treated with ultrasound before and/or during step c).

The method of the invention may further comprise drying of the coffee composition obtained, e.g. by spray drying or freeze drying, if a dry coffee composition is desired. Since the product of the invention is intended to comprise roast coffee particles, preferably no substantial removal of roast coffee particles is performed before drying of the coffee composition.

The method of the invention is also a simple and convenient way of recovering coffee oil from coffee beans. The recovered coffee oil may be useful, e.g. as an ingredient in coffee or other food or beverage products, or for the recovery of components, e.g. diterpenes, which may have pharmaceutical, nutritional and/or other applications.

In a preferred embodiment the invention relates to a method of preparing a pure coffee beverage composition, the method comprising: a) providing particles of roast coffee beans; b) preparing an aqueous slurry of particles of roast coffee beans obtained in step a); c) removing at least 15% by weight of total coffee oil from the aqueous slurry of particles of roast coffee beans obtained in step b); d) combining the aqueous slurry of particles of roast coffee beans with soluble coffee solids extracted from roast coffee beans; and drying the aqueous slurry of the roast coffee particles after step d) to produce a dry coffee beverage composition; wherein step d) is performed before step c) by using a liquid extract of coffee beans to produce the slurry in step b).

In another preferred embodiment the invention relates to a method of preparing a pure coffee beverage composition, the method comprising: a) providing particles of roast coffee beans; b) preparing an aqueous slurry of particles of roast coffee beans obtained in step a); c) removing at least 15% by weight of total coffee oil from the aqueous slurry of particles of roast coffee beans obtained in step b); d) combining the aqueous slurry of particles of roast coffee beans with soluble coffee solids extracted from roast coffee beans; and drying the aqueous slurry of the roast coffee particles after step d) to produce a dry coffee beverage composition; wherein step d) is performed before step c) by using a liquid extract of coffee beans to produce the slurry in step b), and wherein the aqueous slurry of particles of roast coffee beans is treated with ultrasound before step c).

### EXAMPLES

### Example 1

Roast coffee particles were produced from Arabica coffee beans that were roasted by conventional methods and ground into roast coffee particles by two different methods:

### Method A: Cryo milling

Roast coffee beans were cooled to -136 °C using liquid N₂ and the cooled beans were milled at -70°C in an ALPINE Fine Impact mill 160 UPZ to obtain particles with D₉₀ below 60 micrometer.

### Method B: Roller grinding

Roast coffee beans were transported to a roller mill (BRAMBATI 1.4 KLL 600) with multiple stages 4 stages. At each stage of the roller mill the roast coffee beans were broken to smaller particle size in a stage wise progression. Roller settings and throughputs were adjusted to achieve D₉₀ below 150 micrometer.

A coffee extract was produced by extracting roast and ground coffee beans with water using conventional soluble coffee extraction methods. The extract was concentrated by evaporation to a solids content (TC) of 50% by weight.

Roast coffee particles of ground by method A and B, respectively, were mixed into the concentrated coffee extract using a bench-top high shear dispersor for 2-3 minutes, to produce compositions with a total solids content of 55% by weight, wherein 20% by weight of total coffee solids were in the form of roast coffee particles.

The mixed compositions were heated to 80°C and divided into different portions which were centrifuged using a Sorvall laboratory centrifuge at 11000 rpm for 30 minutes or at 5000 rpm for 5 minutes. The centrifuged samples exhibited 3 layers, a layer consisting of substantially pure coffee oil on top of a layer of coffee oil and roast coffee particles, and the main part of the sample in the form of an aqueous composition of roast coffee particles in coffee extract. The oil containing layers were removed by decanting to produce a composition of roast coffee particles in coffee extract. The amount of oil was measured in the mixed compositions before centrifugation and in the composition of roast coffee particles in coffee extract after centrifugation and decanting as described below. The results are shown in table 1.

### Oil measurement

Oil measurement was performed using Buchi extraction method developed for fat measurement. Oil was extracted with hot petroleum benzine by Büchi extraction system B-811 (Büchi Labortechnik AG, Switzerland) followed by a removal of the solvent by evaporation. The extracted fat amount was determined by gravimetrics.

The oil was defined as the sum of triglycerides, diterpenes and other minor components (triterpenes, sterols, tocopherols, phospholipids).

**Table 1. Oil content before and after centrifugation and decanting.**

| Sample No. | Sample type | Oil content (% by weight) |
|---|---|---|
| 1 | Method A, no centrifugation | 3.13 |
| 2 | Method A, centrifugation at 11000 rpm/30 minutes | 0.25 |
| 3 | Method B, centrifugation at 11000 rpm/30 minutes | 1.12 |
| 4 | Method A, no centrifugation | 3.27 |
| 5 | Method B, no centrifugation | 3.32 |
| 6 | Method A, centrifugation at 5000 rpm/5 minutes | 1.31 |
| 7 | Method B, centrifugation at 5000 rpm/5 minutes | 1.27 |

The samples were freeze dried and the freeze dried powders were reconstituted with water to normal drinking strength in a cup and the appearance of scum was inspected visually. The results were as shown in Table 2.

**Table 2. Appearance of scum in the samples of Table 1.**

| Sample No. | Appearance of scum |
|---|---|
| 1 | Significant Amount |
| 2 | No Scum |
| 3 | No Scum |
| 4 | Significant Amount |
| 5 | Significant Amount |
| 6 | Slight Scum Visible on Closer Inspection |
| 7 | Slight Scum Visible on Closer Inspection |

### Example 2

### Size distribution of roast coffee particles

Roast coffee particles were produced as in example 1 using grinding methods A and B. The size distribution of the roast coffee particles was measured by laser diffraction (Malven Mastersizer 2000, Malvern Instruments, Malvern, UK). Insoluble roast coffee particles were suspended in water using stirring and ultrasound to improve dispersion (Malvern Hydro 2000 G dispersion unit).

Results are given in Table 3 and in Figure 1.

**Table 3. Characterisation of size distribution**

| Method | D₁₀ (micrometer) | D₅₀ (micrometer) | D₉₀ (micrometer) |
|---|---|---|---|
| Method A | 3.07 | 24.4 | 51.6 |
| Method B | 3.23 | 30.4 | 109 |

## Claims

1. A coffee beverage composition comprising
i) at least 10% by weight of particles of roast coffee beans; and
ii) at least 30% by weight of soluble coffee solids extracted from roast coffee beans;
wherein the composition comprises less than 1.2 mg of diterpenes per g of coffee solids.

2. The coffee beverage composition of claim 1, wherein D₉₀ of the size distribution of particles of roast coffee beans is below 150 micrometer.

3. The coffee beverage composition of any one of claims 1 or 2, wherein D₉₀ of the size distribution of particles of roast coffee beans is below 80 micrometer.

4. The coffee beverage composition of any one of the preceding claims, wherein D₅₀ of the size distribution of particles of roast coffee beans is below 50 micrometer.

5. The coffee beverage composition of any one of the preceding claims being in the form of a powder

6. The coffee beverage composition of any one of the preceding claims, wherein the composition comprises an amount of coffee oil which is less than the sum of: 15% by weight of the amount of particles of roast *Coffea arabica* coffee beans, and 7% by weight of the amount of particles of roast *Coffea canephora* coffee beans.

7. The coffee beverage composition of any one of the preceding claims, comprising
i) between 15% and 50% by weight of particles of roast coffee beans; and
ii) between 50% and 85% by weight of soluble coffee solids extracted from roast coffee beans.

8. A method of preparing a coffee beverage composition, the method comprising:
a) providing particles of roast coffee beans;
b) preparing an aqueous slurry of particles of roast coffee beans obtained in step a), such that the coffee beverage composition comprises at least 10 % by weight of particles of roast coffee beans ;
c) removing coffee oil from the aqueous slurry of particles of roast coffee beans obtained in step b); and
d) combining the aqueous slurry of particles of roast coffee beans with soluble coffee solids extracted from roast coffee beans, such that the coffee beverage composition comprises at least 30 % by weight of soluble coffee solids extracted from roast coffee beans;
wherein step d) is performed before and/or after step c).

9. The method of claim 8, wherein coffee oil is removed in step c) by centrifugation.

10. The method of any one of claims 8 or 9, wherein steps b) and d) are performed simultaneously by milling coffee beans and/or parts thereof in an aqueous solution of soluble coffee solids.

11. The method of any one of claims 8-10, wherein at least 15% by weight of the total coffee oil of the aqueous slurry is removed in step c).

12. The method of any one of claims 8-11 further comprising drying aqueous slurry of the roast coffee particles after step d), to produce a dry coffee beverage composition.

13. The method of any one of claims 8-12 wherein D₉₀ of the size distribution of particles of roast coffee beans is below 150 micrometer.

14. The method of any one of claims 8-13 wherein the aqueous slurry of particles of roast coffee beans is treated with ultrasound before and/or during step c).

## Patentansprüche

1. Kaffeegetränkezusammensetzung, die Folgendes umfasst:
i) zu mindestens 10 Gew.-% Teilchen gerösteter Kaffeebohnen; und
ii) zu mindestens 30 Gew.-% lösliche Kaffeefeststoffe, die aus gerösteten Kaffeebohnen extrahiert wurden; wobei die Zusammensetzung weniger als 1,2 mg Diterpene pro g Kaffeefeststoffe umfasst.

2. Kaffeegetränkezusammensetzung nach Anspruch 1, wobei der D₉₀ der Größenverteilung der Teilchen gerösteter Kaffeebohnen unter 150 Mikrometer liegt.

3. Kaffeegetränkezusammensetzung nach einem der Ansprüche 1 oder 2, wobei der D₉₀ der Größenverteilung der Teilchen gerösteter Kaffeebohnen unter 80 Mikrometer liegt.

4. Kaffeegetränkezusammensetzung nach einem der vorstehenden Ansprüche, wobei der D₅₀ der Größenverteilung der Teilchen gerösteter Kaffeebohnen unter 50 Mikrometer liegt.

5. Kaffeegetränkezusammensetzung nach einem der vorstehenden Ansprüche, die in Form eines Pulvers vorliegt.

6. Kaffeegetränkezusammensetzung nach einem der vorstehenden Ansprüche, wobei die Zusammensetzung eine Menge an Kaffeeöl umfasst, die geringer ist als die Summe von: 15 Gew.-% der Menge an Teilchen gerösteter *Coffea arabica*-Kaffeebohnen, und 7 Gew.-% der Menge an Teilchen gerösteter *Coffea canephora*-Kaffeebohnen.

7. Kaffeegetränkezusammensetzung nach einem der vorstehenden Ansprüche, umfassend
i) zwischen 15 Gew.-% und 50 Gew.-% Teilchen gerösteter Kaffeebohnen; und
ii) zwischen 50 Gew,-% und 85 Gew.-% lösliche Kaffeefeststoffe, die aus gerösteten Kaffeebohnen extrahiert wurden.

8. Verfahren zum Herstellen einer Kaffeegetränkezusammensetzung, wobei das Verfahren Folgendes umfasst:
a) das Bereitstellen von Teilchen gerösteter Kaffeebohnen;
b) das Herstellen eines wässrigen Breis von Teilchen gerösteter Kaffeebohnen, die in Schritt a) erhalten wurden, auf eine solche Weise, dass die Kaffeegetränkezusammensetzung zu mindestens 10 Gew.-% Teilchen gerösteter Kaffeebohnen umfasst;
c) das Entfernen von Kaffeeöl aus dem wässrigen Brei von Teilchen gerösteter Kaffeebohnen, die in Schritt b) erhalten wurden; und
d) das Kombinieren des wässrigen Breis von Teilchen gerösteter Kaffeebohnen mit löslichen Kaffeefeststoffen, die aus gerösteten Kaffeebohnen extrahiert wurden, auf eine solche Weise, dass die Kaffeegetränkezusammensetzung zu mindestens 30 Gew.-% lösliche Kaffeefeststoffe umfasst, die aus gerösteten Kaffeebohnen extrahiert wurden;
wobei Schritt d) vor und/oder nach Schritt c) durchgeführt wird.

9. Verfahren nach Anspruch 8, wobei das Kaffeeöl in Schritt c) durch Zentrifugation entfernt wird.

10. Verfahren nach einem der Ansprüche 8 oder 9, wobei die Schritte b) und d) gleichzeitig durch Mahlen von Kaffeebohnen und/oder Teilen davon in einer wässrigen Lösung von löslichen Kaffeefeststoffen durchgeführt werden.

11. Verfahren nach einem der Ansprüche 8 bis 10, wobei mindestens 15 Gew.-% des gesamten Kaffeeöls des wässrigen Breis in Schritt c) entfernt werden.

12. Verfahren nach einem der Ansprüche 8 bis 11, das ferner das Trocknen eines wässrigen Breis der gerösteten Kaffeeteilchen nach Schritt d) umfasst, um eine trockene Kaffeegetränkezusammensetzung herzustellen.

13. Verfahren nach einem der Ansprüche 8 bis 12, wobei der D₉₀ der Größenverteilung der Teilchen gerösteter Kaffeebohnen unter 150 Mikrometer liegt.

14. Verfahren nach einem der Ansprüche 8 bis 13, wobei der wässrige Brei von Teilchen gerösteter Kaffeebohnen vor und/oder während Schritt c) mit Ultraschall behandelt wird.

## Revendications

1. Composition de boisson au café comprenant
i) au moins 10 % en poids de particules de grains de café torréfiés ; et
ii) au moins 30 % en poids de solides solubles de café extraits de grains de café torréfiés ; dans laquelle la composition comprend moins de 1,2 mg de diterpènes par g de solides de café.

2. Composition de boisson au café selon la revendication 1, dans laquelle le D₉₀ de la distribution granulométrique des particules de grains de café torréfiés est inférieur à 150 micromètres.

3. Composition de boisson au café selon l'une quelconque des revendications 1 ou 2, dans laquelle le D₉₀ de la distribution granulométrique des particules de grains de café torréfiés est inférieur à 80 micromètres.

4. Composition de boisson au café selon l'une quelconque des revendications précédentes, dans laquelle le D₅₀ de la distribution granulométrique des particules de grains de café torréfiés est inférieur à 50 micromètres.

5. Composition de boisson au café selon l'une quelconque des revendications précédentes sous la forme d'une poudre

6. Composition de boisson au café selon l'une quelconque des revendications précédentes, dans laquelle la composition comprend une quantité d'huile de café qui est inférieure à la somme de : 15 % en poids de la quantité de particules de grains de café *Coffea arabica* torréfiés, et 7 % en poids de la quantité de particules de grains de café *Coffea canephora* torréfiés.

7. Composition de boisson au café selon l'une quelconque des revendications précédentes, comprenant
i) entre 15 % et 50 % en poids de particules de grains de café torréfiés ; et
ii) entre 50 % et 85 % en poids de solides solubles de café extraits de grains de café torréfiés.

8. Procédé de préparation d'une composition de boisson au café, le procédé comprenant :
a) la fourniture de particules de grains de café torréfiés ;
b) la préparation d'une bouillie aqueuse de particules de grains de café torréfiés obtenues à l'étape a), de telle sorte que la composition de boisson au café comprend au moins 10 % en poids de particules de grains de café torréfiés ;
c) l'élimination de l'huile de café de la bouillie aqueuse de particules de grains de café torréfiés obtenue à l'étape b) ; et
d) la combinaison de la bouillie aqueuse de particules de grains de café torréfiés avec des solides solubles de café extraits de grains de café torréfiés, de telle sorte que la composition de boisson au café comprend au moins 30 % en poids de solides solubles de café extraits de grains de café torréfiés ;
dans lequel l'étape d) est effectuée avant et/ou après l'étape c).

9. Procédé selon la revendication 8, dans lequel l'huile de café est éliminée à l'étape c) par centrifugation.

10. Procédé selon l'une quelconque des revendications 8 ou 9, dans lequel les étapes b) et d) sont effectuées simultanément en broyant des grains de café et/ou parties de ceux-ci dans une solution aqueuse de solides solubles de café.

11. Procédé selon l'une quelconque des revendications 8 à 10, dans lequel au moins 15 % en poids de l'huile de café totale de la bouillie aqueuse est éliminée à l'étape c).

12. Procédé selon l'une quelconque des revendications 8 à 11 comprenant en outre le séchage de la bouillie aqueuse des particules de café torréfiées après l'étape d), pour produire une composition sèche de boisson au café.

13. Procédé selon l'une quelconque des revendications 8 à 12 dans lequel le D₉₀ de la distribution granulométrique des particules de grains de café torréfiés est inférieur à 150 micromètres.

14. Procédé selon l'une quelconque des revendications 8 à 13 dans lequel la bouillie aqueuse de particules de grains de café torréfiés est traitée avec des ultrasons avant et/ou pendant l'étape c).
